# EUROPÄISCHE PATENTSCHRIFT

(11) **EP 3 708 936 B1**
(45) Veröffentlichungstag und Bekanntmachung des Hinweises auf die Patenterteilung: **17.04.2024**
(21) Anmeldenummer: 19163075.5
(22) Anmeldetag: 15.03.2019
(51) Int. Cl.: F26B 3/08, C08F 6/10, F26B 5/08

(54) **VERFAHREN ZUM RECYCLING VON POLYOLEFINEN**
METHOD FOR RECYCLING OF POLYOLEFINS
PROCÉDÉ DE RECYCLAGE DE POLYOLÉFINES

(43) Veröffentlichungstag der Anmeldung: 16.09.2020
(73) Patentinhaber: Polymetrix AG, 9245 Oberbüren (CH)
(72) Erfinder: Christel, Andreas, 9524 Zuzwil (CH)
(74) Vertreter: Hepp Wenger Ryffel AG

(56) Entgegenhaltungen:
- EP-A1- 2 433 771
- EP-A1- 2 712 881
- EP-A1- 3 363 841
- EP-A1- 3 442 763
- WO-A1-2011/135745
- CN-A- 107 745 462
- DE-A1-102007 040 135
- JP-A- 2008 000 908
- US-A1- 2002 192 401
- US-A1- 2008 185 758
- US-A1- 2011 201 776
- US-A1- 2012 088 853
- US-A1- 2012 214 885
- US-A1- 2017 218 119

## Beschreibung

Die vorliegende Erfindung betrifft ein verbessertes Verfahren zum Recycling von Polyolefinen.

Aus ökologischen Gründen spielt das Recycling von gebrauchten Kunststoffartikeln eine zunehmende Rolle. Die vorliegende Erfindung betrifft das Recycling von gebrauchtem Polyolefin-Material. Es handelt sich hierbei um Material, das von Artikeln stammt, welche bereits industriell oder privat verwendet wurden. Polyolefin-Material aus industrieller Benutzung wird als post-industrial-Material bezeichnet; Polyolefin-Material aus privater Benutzung wird als post-consumer-Material bezeichnet.

Artikel aus Polyolefin-Material werden umfangreich verwendet, wobei als Polyolefin insbesondere Polyethylen und Polypropylen eingesetzt werden. Beispielsweise sei auf Plastiktüten, Landwirtschaftsfolien oder Plastikflaschen oder andere Behälter verwiesen.

Das gebrauchte Polyolefin-Material ist üblicherweise mit flüchtigen Komponenten verunreinigt, welche das Polyolefin-Material während seines Gebrauchs aufnimmt. Diese flüchtigen Komponenten verleihen dem Polyolefin-Material einen unerwünschten Geruch oder sogar eine Toxizität, welche das Polyolefin-Material für einen weiteren Gebrauch ungeeignet macht. Um das Polyolefin-Material durch Recycling für einen erneuten Gebrauch einsetzbar zu machen, muss während des Recyclings eine effiziente Verringerung oder vorzugsweise vollständige Entfernung flüchtiger Komponenten aus dem Polyolefin-Material erfolgen.

In der US-5,767,230 wurde vorgeschlagen, das Material zunächst in einer Zerkleinerungsvorrichtung wie einem Granulator auf eine bestimmte erforderliche Grösse zu zerkleinern und anschliessend durch Behandlung mit einem heissen Gas wie Luft oder Stickstoff bei vorzugsweise 90-115°C für 1 bis 15 h von flüchtigen Komponenten zu befreien.

Wie in der US-9,028,734 B2 ausgeführt weist diese Vorgehensweise jedoch den Nachteil auf, dass hiermit nur Teilchen mit einer bestimmten Grösse in einer genau auf diese Teilchengrösse abgestimmten Vorrichtung behandelt werden können. Die US-9,028,734 B2 schlug daher vor, die zu behandelnden Teilchen durch Extrusion und anschliessende Granulation herzustellen. Hierbei wurde das extrudierte Granulat in ein Kühlbad aus Wasser gegeben und mit Hilfe des Wassers in einen Behandlungsreaktor überführt. In diesem Behandlungsraum wurde das Granulat mit heisser Luft von vorzugsweise 90 bis 125°C erhitzt und von flüchtigen Komponenten befreit.

Alternativ wurde in der EP-2 072 203 A1 vorgeschlagen, ein durch Extrusion und anschliessende Unterwassergranulation bei 40-60°C hergestelltes Granulat in einen Behandlungsreaktor zu überführen und dort mit beispielsweise heissem Wasser von etwa 75-100°C für 15 min bis 6 h zu erwärmen und von flüchtigen Komponenten zu befreien.

Gemäss der WO 2013/072 035 A1 macht aber die Verwendung heissen Wassers (oder einer anderen heissen Flüssigkeit) als Reinigungsmedium eine aufwendige Reinigungsstufe erforderlich. In der WO 2013/072 035 A1 wurde daher vorgeschlagen, eine Granulat-Flüssigkeits-Aufschlämmung durch Extrusion und anschliessende Unterwassergranulation bei 40-60°C herzustellen und danach in einem Behandlungsraum mit beispielsweise Wasserdampf zu erwärmen und von flüchtigen Komponenten zu befreien. Es wurde als wesentlicher Aspekt der dortigen Lehre beschrieben, dass im Behandlungsraum die Kombination von anwesender Flüssigkeit und anwesendem Dampf zu einer effektiven Entfernung von flüchtigen Komponenten führt und zudem auf einen Trocknungsschritt vor dem Behandlungsraum verzichtet werden kann.

US 2012/088853 A1, US 2012/214885 A1, US 2008/185758 A1 und US 2017/218119 A1 offenbaren weitere Verfahren nach dem Stand der Technik.

Die Lehre des Stands der Technik ist immer noch nicht optimal. Die Einführung einer Granulat-Wasser-Aufschlämmung in den Behandlungsraum hat den Nachteil, dass bei Einsatz von Luft oder eines anderen trockenen Gases das in der Aufschlämmung enthaltene Wasser verdampft, was zu einer unerwünschten Abkühlung der Granulate führt.

Es war die Aufgabe der vorliegenden Erfindung, die Nachteile aus dem Stand der Technik zu überwinden und ein verbessertes Verfahren zum Recycling von Polyolefinen bereitzustellen.

Diese Aufgabe wird durch den Gegenstand des Anspruchs 1 gelöst. Die vorliegende Erfindung betrifft ein Verfahren zum Recycling von Polyolefinen, umfassend die Schritte
a) Extrusion von gebrauchtem Polyolefin-Material das mit flüchtigen Komponenten verunreinigt ist, welche das Polyolefin-Material während seines Gebrauchs aufgenommen hat,
b) Herstellung von Granulaten aus dem aus der Extrusion austretenden Polyolefin-Material in einem flüssigen Kühlmedium,
c) Abtrennen des Kühlmediums zum Erhalt eines trockenen Polyolefingranulats
d) Behandlung des trockenen Polyolefingranulats in einem Behandlungsraum mit einem Behandlungsgas, vorzugsweise im Gegenstrom,
dadurch gekennzeichnet, dass das Verfahren derart durchgeführt wird, dass das trockene Polyolefingranulat direkt nach dem Abtrennen des Kühlmediums in Schritt c) noch eine Temperatur T2 aufweist, welche oberhalb einer Temperatur T1 des flüssigen Kühlmediums im Schritt b) und im Bereich von 71°C-200°C, vorzugsweise 80°C-160°C, aber unterhalb des Schmelzpunkts des Granulats liegt, und mindestens 75% der trockenen Polyolefingranulate im Behandlungsraum eine Temperatur T3 aufweisen, welche in einem Bereich von T2 ± 20°C liegt, aber unterhalb des Schmelzpunkts des Granulats.

Es wurde erfindungsgemäss überraschend gefunden, dass eine effiziente und energetisch vorteilhafte Entfernung flüchtiger Komponenten aus Polyolefin-Material möglich ist, wenn die Herstellung eines Polyolefin-Granulats aus gebrauchtem Polyolefin-Material durch Einbringen eines aus der Extrusion austretenden Polyolefin-Materials in ein heisses flüssiges Kühlmedium gefolgt von rascher Abtrennung des Polyolefin-Granulats vom flüssigen Kühlmedium erfolgt, wobei das das flüssige Kühlmedium hierbei vorzugsweise eine Temperatur T1 im Bereich von 50 bis 100°C, bevorzugt 70 bis 100°C, noch bevorzugter 75 bis 95°C und insbesondere bevorzugt 80 bis 90°C aufweist. Erfindungsgemäss bevorzugt handelt es sich beim dem Kühlmedium um Wasser.

Auf diese Weise behält das so hergestellte Polyolefin-Granulat eine für die anschliessende Behandlungsstufe erforderliche Temperatur; ein energetisch nachteiliges Aufheizen des Polyolefin-Granulats durch das Reinigungsgas in der Behandlungsstufe, wie es im vorstehend diskutierten Stand der Technik erforderlich ist, erübrigt sich daher.

Weiterhin wurde erfindungsgemäss gefunden, dass es im Gegensatz zur Lehre der WO 2013/072 035 A1 vorteilhaft ist, keine Granulat-Wasser-Aufschlämmung in den Behandlungsraum zur Entfernung flüchtiger Komponenten einzuführen, sondern vielmehr trockenes Polyolefingranulat. Es wurde erfindungsgemäss gefunden, dass die in der WO 2013/072 035 A1 beschriebene Anwesenheit von Wasser im Behandlungsraum für eine effiziente Entfernung flüchtiger Komponenten nicht erforderlich ist. Die mit der Anwesenheit von Wasser im Behandlungsraum einhergehenden Nachteile (unerwünschte Abkühlung der Granulate aufgrund Verdampfung von Wasser bei Einsatz von Luft oder eines anderen trockenen Gases im Behandlungsraum) können erfindungsgemäss somit überwunden werden.

Erfindungsgemäss wird somit das Polyolefingranulat nach seiner Herstellung rasch vom flüssigen Kühlmedium aus der Granulationsstufe abgetrennt, so dass es direkt nach dem Abtrennen des Kühlmediums eine Temperatur T2 aufweist, welche oberhalb der Temperatur T1 des flüssigen Kühlmediums liegt. Mit anderen Worten erfolgt die Abtrennung des flüssigen Kühlmediums aus der Granulationsstufe innerhalb weniger Sekunden, vorzugsweise höchstens 10 s, nachdem das Polyolefin-Material nach Austritt aus dem Extruder in Kontakt mit dem flüssigen Kühlmedium kam.

Auf diese Weise wird sichergestellt, dass mindestens 75% des trockenen Polyolefingranulats im Behandlungsraum eine Temperatur T3 aufweist, welche in einem Bereich von T2 ± 20°C liegt, aber unterhalb des Schmelzpunkts des Granulats. Selbstverständlich darf das Polyolefin-Material während der Behandlungsstufe nicht schmelzen. Mit anderen Worten weist das Polyolefingranulat im Behandlungsraum die zur effizienten Entfernung flüchtiger Komponenten mit Hilfe eines Gases wie Luft erforderliche Temperatur bereits aufgrund der vorgängigen Verfahrensschritte auf, ohne dass ein Erhitzen des Polyolefingranulats im Behandlungsraum erforderlich wäre. Das erfindungsgemässe Verfahren ist somit energetisch effizient.

Die vorliegende Erfindung betrifft das Recycling von gebrauchtem Polyolefin-Material.

Erfindungsgemäss wird unter einem gebrauchten Material ein material verstanden, welches bereits mindestens einmal industriell oder privat verwendet wurden. Polyolefin-Material aus industrieller Benutzung wird als post-industrial-Material bezeichnet; Polyolefin-Material aus privater Benutzung wird als post-consumer-Material bezeichnet.

Ein Polyolefin ist ein Polymer, welches durch Polymerisation von Olefin-Monomeren (d.h. von Alkenen) hergestellt wird. Industriell sind im Wesentlichen Polyolefine relevant, welche aus C₂-C₁₀-Alkenen aufgebaut sind. Besonders bevorzugt sind Polyolefine auf Basis von Ethen (d.h. Polyethylen) oder Propen (d.h. Polypropylen). Die mit dem erfindungsgemässen Verfahren zu behandelnden Polyolefine können Hompolymere oder Co-Polymere aus den vorstehend genannten Monomeren sein.

Die Herstellung von Polyolefinen ist hinlänglich bekannt (beispielsweise das Ziegler-Natta-Verfahren) und muss hier nicht näher erläutert werden. Typischerweise werden die Alken-Monomere in Gegenwart geeigneter Katalysatoren polymerisiert.

Die vorliegende Erfindung betrifft die effiziente Abtrennung von gebrauchtem Polyolefin-Material von flüchtigen Komponenten. Diese flüchtigen Komponenten werden vom Polyolefin-Material während seines Gebrauchs aufgenommen, beispielsweise durch Absorption oder Diffusion.

Beim gebrauchten Polyolefin-Material handelt es sich zum Beispiel um Behälter aus dem Gesundheits- und Körperpflegebereich, um Behälter für Reinigungsmittel und Getränke, wie Milch, Wasser oder Fruchtsäfte, oder um Behälter und Schalen für feste oder pastöse Lebensmittel, wie Joghurt oder Fertiggerichte, wobei es sich bei den flüchtigen Komponenten um natürlich vorkommende oder zugesetzte Aromasubstanzen, um Rückstände der Füllgüter, um Abbauprodukte der Füllgüter wie auch um Abbauprodukte des Polyolefin-Material handeln kann. Weiter umfassen die flüchtigen Substanzen, Substanzen, die während den vorgängigen Schritten zur Rückführung, Sortierung und Aufbereitung mit dem Polyolefin Material in Kontakt gekommen sind und von diesem aufgenommen wurden.

Weiter kann es sich beim gebrauchten Polyolefin-Material zum Beispiel um Folien aus dem Haushaltsbereich oder Landwirtschaftsbereich handeln, wobei es sich in diesem Fall bei den flüchtigen Komponenten um Substanzen handeln kann, die aus anhaftenden Produkten, wie zum Beispiel Lebensmittelresten, Erde oder Düngemitteln, übertragen wurden.

Erfindungsgemäss wird unter einer flüchtigen Komponente eine Substanz verstanden, welche bei Lagerbedingungen von -60°C bis 60°C durch Diffusion aus dem Polyolefin-Material austreten kann. Üblicherweise haben derartige Substanzen ein Molekulargewicht von 30 bis 300g/mol und unter Atmosphärendruck einen Siedepunkt von -60°C bis 360°C, vorzugsweise weniger als 280°C und besonders bevorzugt weniger als 230°C. Insbesondere handelt es sich bei den flüchtigen Komponenten um niedermolekulare Substanzen mit 1 bis 30 Kohlenstoffatomen, vorzugsweise 1 bis 20 Kohlenstoffatomen, bevorzugter 1 bis 15 Kohlenstoffatomen und besonders bevorzugt 2 bis 12 Kohlenstoffatomen. Beispielhafte flüchtige Verbindungen sind entsprechende Kohlenwasserstoffe, Alkohole oder Terpene wie Limonen, Amine oder Thiole.

Vor der Durchführung des erfindungsgemässen Verfahrens kann das gebrauchte Polyolefin-Material vorzugsweise eine Vorbehandlung unterzogen werden. Beispielsweise ist die Vorbehandlung ausgewählt aus der Gruppe bestehend aus Sortierung nach Farbe, Sortierung nach Polymerart, Zerkleinerung, Oberflächenreinigung wie Waschen, Vortrocknung, und Kombinationen davon. Diese Vorbehandlungsschritte sind hinlänglich bekannt. So kann eine Sortierung nach Farbe manuell oder vorzugsweise mit entsprechenden Sortiermaschinen (wie beispielsweise nach der Sortex^{®}-Technologie arbeitende Maschinen) durchgeführt werden. Eine Sortierung nach Polymerart kann beispielsweise durch eine Dichtetrennung wie in einem Schwimm-Sink-Becken durchgeführt werden. Eine Zerkleinerung kann in bekannten Zerkleinerungsmaschinen wie einer Granulationsvorrichtung erfolgen. Eine Oberflächenreinigung kann mit bekannten Lösungsmitteln (kaltes oder heisses Wasser, organische Lösungsmittel) durchgeführt werden, welche gegebenenfalls mit oberflächenaktiven Substanzen (wie Seifen oder nichtionischen Tensiden) versetzt sind.

Eine besondere Ausführungsform sieht vor, dass durch gezielte Sammlung und Sortierung das erfindungsgemäss zu reinigende Polyolefin-Material zu mehr als 95%, insbesondere zu 99 bis 100% aus Polyolefinflaschen, Behältern oder Schalen für Lebensmittel stammt, wobei das erfindungsgemäss gereinigte Polyolefin-Material wieder in direktem Kontakt mit Lebensmittel eingesetzt werden kann.

Je nach Art und Grad der Verschmutzung bzw. Verunreinigung des gebrauchten Polyolefin-Materials können eine oder mehrere der vorstehend genannten Vorbehandlungen durchgeführt werden. Bei nur gering verunreinigtem Material kann aber auf eine Vorbehandlung auch verzichtet werden.

Das gebrauchte und gegebenenfalls wie vorstehend beschrieben vorbehandelte Polyolefin-Material wird in einem Extruder aufgeschmolzen. Erfindungsgemäss können hierfür übliche Einwellen-, Zweiwellen- oder Mehrwellenextruder verwendet werden. Ein verwendbarer Zweiwellenextruder ist beispielsweise in der DE 195 36 289 C2 beschrieben. Ein verwendbarer Mehrwellenextruder wie ein ringförmiger 12-Wellenextruder ist beispielsweise in der WO 03/022050 A1 beschrieben.

Das gebrauchte und gegebenenfalls wie vorstehend beschrieben vorbehandelte Polyolefin-Material wird in festem Zustand in eine Einlassöffnung des Extruders eingeführt und dort durch Erhitzen aufgeschmolzen.

Gemäss einer bevorzugten Ausführungsform kann während des Erhitzens des Polyolefin-Materials eine Vortrocknung und/oder Entgasung durchgeführt werden, indem das Material vor dem Extruder in einem Trockner oder in einem ersten Abschnitt des Extruders für eine vorbestimmte Zeit bei einer Temperatur unterhalb der Schmelztemperatur gehalten wird. Der Trockner und/oder Extruder weist in diesem Bereich vorzugsweise eine Auslassöffnung für entweichende flüchtige Komponenten auf. Gemäss einer bevorzugten Ausführungsform der vorliegenden Erfindung kann diese Vortrocknung und/oder Entgasung unter verringertem Druck und/oder unter Zugabe eines Inertgases durchgeführt werden. In diesem Fall weist der Extruder die hierfür erforderlichen Einheiten (Vakuumpumpe bzw. Gasein- und auslass) auf. Alternativ kann die Entgasung aber auch erst nach Aufschmelzen des Polyolefin-Materials durchgeführt werden. Auch in diesem Fall kann die Schmelzeentgasung unter verringertem Druck und/oder unter Zugabe eines Inertgases durchgeführt werden. In diesem Fall weist der Extruder die hierfür erforderlichen Einheiten (Vakuumpumpe bzw. Gasein- und auslass) auf.

Das geschmolzene Polyolefin-Material kann gemäss einer bevorzugten Ausführungsform zudem durch eine Schmelzefiltration zur Abscheidung von Verunreinigungspartikeln aufgereinigt werden. Zum Aufbau des notwendigen Druckes wird vorzugsweise eine Schmelzepumpe eingesetzt. Diese Schritte und die hierfür erforderlichen Komponenten sind dem Fachmann bekannt.

In einer Austrittsvorrichtung aus dem Extruder, insbesondere einer Düse oder Düsenplatte, werden aus der Polyolefinschmelze einzelne Polymerstränge geformt. Zur Herstellung von Granulaten (d.h. Teilchen definierter Form und Grösse) aus den Polymersträngen können die im Stand der Technik bekannten Granulationstechniken, wie Stranggranulation, Wasserringgranulation, Unterwassergranulation oder Kopfgranulation (auch hot face - Granulation) verwendet werden. Dabei werden die Polymerstränge, die aus den Schmelzekanälen austreten, verfestigt und in eine Vielzahl an einzelnen Granulaten aufgetrennt, wobei das Auftrennen vor oder nach dem Verfestigen erfolgen kann. Das Auftrennen erfolgt zum Beispiel durch eine selbstständige Tropfenbildung, durch den Einsatz eines flüssigen Schermediums oder durch ein mechanisches Trennen, insbesondere Schneiden. Während eine selbstständige oder eine durch ein Schermedium erzwungene Tropfenbildung am Düsenaustritt erfolgt, kann ein Schneiden sowohl direkt am Düsenaustritt erfolgen oder aber erst nach dem Durchlaufen einer Behandlungsstrecke.

Das Verfestigen der Polyolefinschmelze erfolgt durch Kühlen mit Hilfe mindestens eines flüssigen Kühlmediums oder einer Kombination verschiedener flüssiger Kühlmedien. Als flüssiges Kühlmedium sind insbesondere Flüssigkeiten geeignet, die eine hohe spezifische Wärmekapazität, bevorzugt grösser als 2 kJ/(kg·K) und einen ausreichend hohen Siedepunkt, bevorzugt grösser als 90°C aufweisen, sowie das Polyolefin nicht wesentlich angreifen oder verändern und keine toxischen Rückstände im Polyolefin hinterlassen. Erfindungsgemäss bevorzugt wird ein einziges flüssiges Kühlmedium verwendet. Bevorzugt sind Wasser oder Ethylenglykol oder deren Gemische. Besonders bevorzugt ist Wasser als Kühlmedium.

Erfindungsgemäss bevorzugt hat das flüssige Kühlmedium bei Eintritt in die Granulationsvorrichtung eine Temperatur, welche mindestens 50°C, bevorzugter mindestens 70°C beträgt, aber unterhalb seines Siedepunktes liegt. Im Fall von Wasser beträgt die Temperatur des Kühlmediums gemäss dieser Ausführungsform bei Normaldruck daher 50° bis 100°C, bevorzugter 70°C bis 100°C, noch bevorzugter 75°C-95°C, und besonders bevorzugt 80°C-90°C. Durch die Druckabhängigkeit des Siedepunktes erhöht sich die geeignete Temperatur des flüssigen Kühlmediums bei erhöhtem Druck im Flüssigkeitssystem. Bei tieferem Druck reduziert sich die geeignete Temperatur, was unter anderem auch bei offenen Systemen mit tiefem Aussendruck der Fall ist.

Erfindungsgemäss bevorzugt erfolgt die Granulation durch eine Stranggranulation oder durch eine Unterwassergranulation, wobei die Unterwassergranulation besonders bevorzugt ist.

Bei der Unterwassergranulation erfolgt die Granulierung unter Wasser. Die erhaltenen Granulatpartikel werden im Unterwassergranulator gleichzeitig abgekühlt. Wie vorstehend ausgeführt darf die Abkühlung aber nicht so stark ausfallen, dass die Granulatpartikel unterhalb der für die nachfolgende Behandlung im Behandlungsraum erforderlichen Temperatur abgekühlt werden. Dies kann beispielsweise durch den Einsatz von erwärmtem Wasser, welches eine Temperatur bei Normaldruck von 50°C bis 100°C, vorzugsweise 70°C bis 100°C, bevorzugter 75°C-95°C, und besonders bevorzugt 80°C-90°C aufweist, und rascher Abtrennung des gebildeten Polyolefin-Granulats vom flüssigen Kühlmedium erreicht werden. Zudem darf das Granulat nur kurz mit dem flüssigen Kühlmedium in Kontakt kommen. Erfindungsgemäss beträgt die Kontaktzeit von Granulat und flüssigem Kühlmedium wenige Sekunden, vorzugsweise höchstens 10 s, besonders bevorzugt 0,1 bis 3 s und insbesondere bevorzugt 0,2 bis 1.5 s.

Die derart hergestellten Granulate sollen bevorzugterweise eine definierte Granulatform, wie zum Beispiel zylinderförmig, kugelförmig, tropfenförmig, linsenförmig, kugelähnlich oder einer Design-Form, wie sie zum Beispiel in EP 0 541 674 vorgeschlagen ist, aufweisen. Die mittlere Granulatgrösse soll zwischen 0.1 mm und 10 mm, bevorzugterweise zwischen 0.5 mm und 3.5 mm und besonders bevorzugt zwischen 0.85 mm und 3 mm liegen. Als mittlere Granulatgrösse gilt der statistische Mittelwert des mittleren Granulatdurchmessers, der sich aus dem Durchschnitt aus Granulathöhe, -länge und -breite (mit bekannten Methoden messbar) ergibt. Die Granulatgrössenverteilung soll in einem engen Spektrum gehalten werden. Bevorzugt ist die Standardabweichung der Granulatgewichte von 100 gemessenen Granulaten zwischen 2 und 20%.

Das Granulat wird anschliessend über eine Verbindungsleitung in eine Einheit zum Trocknen des Granulats (Trennvorrichtung zur Abtrennung vom Kühlmedium) überführt. Zur Vermeidung einer zu starken Abkühlung des Granulats sollte dieses so schnell wie möglich aus dem Granulator und durch die Verbindungsleitung geführt werden. Vorzugsweise kann die Fliessgeschwindigkeit in der Verbindungsleitung durch Einleitung eines Gasstroms (vorzugsweise Luft) erhöht werden.

Das Trennen der Granulate von einem flüssigen Kühlmedium erfolgt in einem Behandlungsraum mittels im Stand der Technik bekannter Trennvorrichtungen als Trocknungsvorrichtung. Dabei kann es sich lediglich um passive Trennvorrichtungen, wie zum Beispiel Gitter oder Roste, handeln, durch die das Kühlmedium, nicht aber das Granulat durchtreten kann. Üblicherweise werden aktive Trennvorrichtungen zumindest für einen Teil der Trennung verwendet, wobei die Trennung zum Beispiel aufgrund einer Gasdurchströmung, einer Zentrifugalkraft, eines Aufpralls, einer Verdampfung oder Kombinationen daraus erfolgen kann. Solche Vorrichtungen sind zum Beispiel als Absaugvorrichtungen, Pralltrockner oder Zentrifugaltrockner bekannt. Das Abtrennen kann durch die Zufuhr eines Gasflusses in die Trennvorrichtung unterstützt werden, wobei der Gasfluss optional erwärmtes oder getrocknetes Gas, insbesondere Luft umfasst. Ein Zentrifugaltrockner mit Luftzufuhr ist bevorzugt.

Zur beschleunigten Verdampfung von flüssigem Kühlmedium kann gemäss einer bevorzugten Ausführungsform der vorliegenden Erfindung in der Trennvorrichtung bevorzugt eine Temperatur im Bereich von 80 bis 160°C, vorzugsweise von 90 °C bis 140 °C und besonders bevorzugt von 95 bis 120 °C angelegt werden. Das Granulat verweilt in der Trennvorrichtung höchstens 10 s, besonders bevorzugt 0,1 bis 3 s und insbesondere bevorzugt 0,1 bis 2 s.

Die Trennvorrichtung weist mindestens eine Eintragsöffnung für die Zufuhr des Granulats in die Einheit auf. Bei der Eintragsöffnung kann es sich zum Beispiel um eine Öffnung im Gehäuse oder um den Austritt aus einem Rohr, das in das Gehäuse geführt wird, handeln. Weiterhin weist die Trennvorrichtung mindestens eine Austragsöffnung für die Wegfuhr des Granulats aus der Einheit auf. Bei der Austragsöffnung kann es sich zum Beispiel um eine Öffnung im Gehäuse oder um den Eintritt in ein Rohr, das aus dem Gehäuse heraus geführt wird, handeln. Weiterhin weist die Trennvorrichtung mindestens eine Austragsöffnung für die Wegfuhr des flüssigen Kühlmediums aus der Einheit auf.

Im Behandlungsraum liegt eine Gasphase vor, welche das verdampfende Kühlmedium aufnimmt. Bevorzugt handelt es sich bei dem Gas um Luft. Es können aber auch andere Gase oder Gasgemische mit einem niedrigeren Sauerstoffgehalt als Luft verwendet werden.

Die Trennvorrichtung ist vorzugsweise keine abgeschlossene Einheit. Die Trennvorrichtung weist vorzugsweise mindestens eine Austrittsöffnung zur Abfuhr von Gas, vorzugsweise Luft, auf. Bevorzugt mündet die Austrittsöffnung der Trennvorrichtung in eine Gasabfuhrleitung, in welcher ein Ventilator zur Luftzirkulation durch die Trennvorrichtung angeordnet ist. Optional ist die Austrittsöffnung mit einem Kondensator zur Rückgewinnung von flüssigem Kühlmedium aus dem abgeführten Gas verbunden.

Die Trennvorrichtung kann weiterhin mindestens eine Eintrittsöffnung zur Einleitung von Gas, vorzugsweise Luft, aufweisen. Die Eintrittsöffnung ist in diesem Fall bevorzugt am entgegen gesetzten Ende des Behandlungsraums zur Austrittsöffnung angeordnet, um ein vollständiges Durchströmen des Behandlungsraums mit Gas zu gewährleisten. Es ist aber auch möglich, dass die Eintrittsöffnung zur Einleitung von Gas nicht in der Trennvorrichtung angeordnet ist, sondern in einer nachfolgenden Einheit oder einer Verbindungsleitung zu einer nachfolgenden Einheit.

Gemäss einer Ausführungsform wird das Gas über einen Ansaugfilter der Eintrittsöffnung zugeführt. In der zur Eintrittsöffnung führenden Gasleitung kann ein Ventilator zur Luftzirkulation durch die Trennvorrichtung angeordnet sein. Dieser Ventilator kann zusätzlich zum Ventilator in der Gasabfuhrleitung vorgesehen sein oder an dessen Stelle treten.

Die zur Eintrittsöffnung führende Leitung und die von der Austrittsöffnung abgehende Leitung können miteinander untere Ausbildung eines geschlossenen Kreislaufs verbunden sein. Bei dieser Ausführungsform muss das Gas vor Wiedereintritt in den Behandlungsraum aber durch einen Kondensator geführt werden, um das im Gas befindliche verdampfte Kühlmedium abzutrennen.

Die erfindungsgemässe Vorrichtung weist vorzugsweise einen Kühlmedium-Kreislauf auf. Das Kühlmedium wird aus einem Vorratsbehälter (Tank) vorzugsweise über eine Umwälzpumpe und gegebenenfalls einen Wärmetauscher (zum wahlweisen Erhitzen oder Abkühlen des Kühlmediums) in die Formeinheit (Granulationsvorrichtung) geführt. Das in der Trennvorrichtung oder einem allfälligen Kondensator abgetrennte Kühlmedium kann über eine Rohrleitung zurück in den Vorratsbehälter geführt werden.

Erfindungsgemäss wird das Polyolefingranulat nach seiner Herstellung rasch vom flüssigen Kühlmedium aus der Granulationsstufe abgetrennt, so dass es direkt nach dem Abtrennen des Kühlmediums eine Temperatur T2 aufweist, welche oberhalb der Temperatur T1 des flüssigen Kühlmediums liegt.

Erfindungsgemäss bevorzugt weist das Polyolefingranulat direkt nach dem Abtrennen des Kühlmediums eine Temperatur T2 aufweist, welche im Bereich von 71°C-200°C, vorzugsweise 80°C-160°C und im Fall von Polyethylen besonders bevorzugt bei 71°-120°C liegt.

Nach Abtrennung des flüssigen Kühlmediums ist das Polyolefingranulat trocken. Erfindungsgemäss ist unter "trocken" zu verstehen, dass das Granulat eine maximale Restfeuchte von 2 Gew.-%, vorzugsweise von 0,01-1,5 Gew.-% und insbesondere bevorzugt 0,01-1 Gew.-% aufweist.

Nach dem Abtrennen der Polyolefingranulate vom flüssigen Kühlmedium erfolgt ein Übertrag in die nachfolgende Einheit, nämlich die Behandlungsvorrichtung welche einen Behandlungsraum umfasst. Vorzugsweise wird dies mit Hilfe einer Verbindungsleitung erreicht, welche zwischen Trennvorrichtung und Behandlungsvorrichtung angeordnet ist und die Austragsöffnung der Trennvorrichtung mit der Eintragsöffnung der Behandlungsvorrichtung verbindet.

Die Verbindungsleitung ist gemäss einer Ausführungsform der vorliegenden Erfindung derart ausgestaltet, dass ein ungehinderter Durchtritt der zu behandelnden Polyolefingranulate von der vorgeschalteten Einheit zur nachfolgenden Einheit gewährleistet ist.

Gemäss einer anderen Ausführungsform der vorliegenden Erfindung ist in der Verbindungsleitung zwischen Trennvorrichtung und Behandlungsvorrichtung ein Sieb angeordnet, durch das einzelne Granulate mit spezifikationsgemässer Grösse ungehindert durchtreten können, das jedoch Granulatagglomerate und zu grosse Granulate zurück hält.

Gemäss einer anderen Ausführungsform der vorliegenden Erfindung ist in der Verbindungsleitung zwischen Trennvorrichtung und Behandlungsvorrichtung eine Absperreinheit, vorzugsweise eine Schleuseneinheit wie zum Beispiel eine Zellradschleuse, oder ein Schieber, oder eine Anfahrweiche angeordnet.

Gemäss einer anderen Ausführungsform der vorliegenden Erfindung sind in der Verbindungsleitung zwischen Trennvorrichtung und Behandlungsvorrichtung mehrere der vorstehend genannten Einheiten aus der Gruppe bestehend aus Sieb, Schleuseneinheit wie zum Beispiel eine Zellradschleuse, Schieber, und Anfahrweiche angeordnet.

Die Förderung des Granulats in den Verbindungsleitungen kann entweder durch freien Fall (d.h. aufgrund der Gravitationskraft in einer vertikal oder geneigt angeordneten Leitung), mechanisch oder bevorzugt pneumatisch erfolgen. Gemäss einer besonders bevorzugten Ausführungsform der vorliegenden Erfindung erfolgt die pneumatische Förderung der Granulate durch die Verbindungsleitungen mittels einer Dichtstromförderung mit einer Fördergeschwindigkeit von 1-8 m/s, oder alternative mittels einer Dünnstromförderung mit einer Fördergeschwindigkeit von 10-18 m/s. Bevorzugt wird das Fördergas vor dem in Kontaktbringen mit dem Polyolefingranulat erwärmt, um eine übermässige Abkühlung des Polyolefingranulats während der Förderung zu verhindern. Optional wird das Fördergas derart erwärmt, dass das Polyolefingranulat am Austritt aus der Förderung eine höhere Temperatur aufweist als am Eintritt in die Förderung.

Bevorzugt liegt die Fördergastemperatur im Bereich von 60 bis 200°C, für Polyethylen insbesondere im Bereich von 60 bis 160°C, bevorzugt von 70 bis 120°C, für Polypropylen insbesondere im Bereich von 80 bis 180°C, bevorzugt von 90 bis 160°C,

Das Polyolefingranulat tritt anschliessend in einen Behandlungsraum ein, welcher in einer Behandlungsvorrichtung angeordnet ist. In diesem Behandlungsraum erfolgt die effiziente Entfernung der flüchtigen Komponenten aus dem Polyolefingranulat.

Erfindungsgemäss bevorzugt durchfliessen die Polyolefingranulate den Behandlungsraum im Wesentlichen von oben nach unten, während der Behandlungsraum im Gegenstrom oder alternativ im Kreuzstrom oder einer Kombination von Gegenstrom und Kreuzstrom von einem Behandlungsgas durchströmt wird.

Als Behandlungsgase können zum Beispiel Luft, Wasserdampf oder Inertgase wie Stickstoff, Edelgase wie Argon, oder CO₂ zum Einsatz kommen. Das Behandlungsgas kann ein Gemisch mehrerer Behandlungsgase umfassen. Das Behandlungsgas kann Additive enthalten, welche die Entfernung der flüchtigen Komponenten unterstützen. Erfindungsgemäss bevorzugt ist das Behandlungsgas Luft. Als Luft kann dabei angesaugte Umgebungsluft, Luft aus einem Druckluftnetz, üblicherweise mit einem Taupunkt von unter 10°C, oder Luft aus einem Trockenlufterzeuger, üblicherweise mit einem Taupunkt unter -10°C, verwendet werden.

Die Behandlungsvorrichtung mit Behandlungsraum kann grundsätzlich eine beliebige Einheit sein, in welcher eine Granulatbehandlung mit einem Gas durchgeführt werden kann. Mit anderen Worten kann das erfindungsgemässe Verfahren mit jeder Einheit durchgeführt werden, in welcher die erfindungsgemässen Bedingungen eingestellt werden können.

Erfindungsgemäss bevorzugt ist Behandlungsvorrichtung mit Behandlungsraum unterhalb der Trennvorrichtung angeordnet.

Der Behandlungsraum ist von einem Gehäuse umgeben. Der horizontale Querschnitt des Behandlungsraumes kann eine beliebige Form aufweisen, ist bevorzugterweise aber rund oder rechteckig. Der Behandlungsraum ist bevorzugt im Wesentlichen vertikal, besonders bevorzugt genau vertikal angeordnet, so dass das Granulat die Vorrichtung von oben nach unten in Form eines bewegten Festbetts durchfliessen kann. Wichtig ist dabei, dass ein gleichmässiger Produktfluss erreicht werden kann. Der Behandlungsraum ist seitlich durch einen Mantel begrenzt. Die Mantelwand kann dabei aus zylindrischen, konischen oder aus einer Kombination aus konischen und zylindrischen Segmenten bestehen, wodurch sich die Gasgeschwindigkeitsverteilung über die Höhe der Vorrichtung beeinflussen lässt. Eine Verengung im Deckenbereich erlaubt eine Erhöhung der Gasgeschwindigkeit, was zu einer lokalen Verwirbelung führt, wodurch sich eine verbesserte Produktverteilung erreichen lässt.

Eine besondere Ausführungsform der vorliegenden Erfindung sieht einen wenigstens annähernd rotationssymmetrischen Gehäusemantel vor, was fertigungstechnische Vorteile sowie Vorteile für einen regelmässigen Produktfluss ergibt.

Im Innern des Behandlungsraumes können Verdrängungskörper angeordnet sein, die nicht vom Granulat durchflossen werden und somit den Behandlungsraum verkleinern. Solche Verdrängungskörper können zum Beispiel zur Durchführung von Behandlungsgas, zur Anpassung der freien Querschnittsfläche oder zur Verbesserung des Granulatflusses eingesetzt werden.

Im Innern des Behandlungsraumes können Trennwände angeordnet sein, die den Behandlungsraum in zwei oder mehrere Kammern unterteilen. Die Kammern können durch Durchlassöffnungen für die Granulate miteinander verbunden sein.

Bevorzugt mündet zumindest eine Eintragsöffnung in den Deckenbereich des Behandlungsraumes und ermöglicht das Einführen des zu behandelnden Granulats in den Behandlungsraum. Bei der Eintragsöffnung kann es sich zum Beispiel um eine Öffnung im Gehäuse oder um den Austritt aus einem Rohr, das in das Gehäuse geführt wird, handeln. Die Eintragsöffnung kann in mehrere Segmente unterteilt sein, was eine Verteilung der Granulate im Behandlungsraum erlaubt.

Bevorzugt mündet zumindest eine Austragsöffnung in den unteren Teil des Behandlungsraumes, durch die behandeltes Granulat aus dem Behandlungsraum ausgetragen werden kann. Bei der Austragsöffnung kann es sich zum Beispiel um eine Öffnung im Gehäuse oder um den Eintritt in ein Rohr, das aus dem Gehäuse heraus geführt wird, handeln. Üblicherweise wird das Granulat durch einen konischen Bereich der Austragsöffnung zugeführt. Der Winkel des Auslaufkonus beträgt zur Horizontalen bevorzugterweise 50 - 80°, wenn das Granulat im Austragskonus nicht fluidisiert oder vibriert wird, und 15-60°, insbesondere 30-50°, wenn das Granulat im Austragskonus fluidisiert oder vibriert wird. Alternativ kann das Granulat auch mittels einer mechanischen Austragsvorrichtung, wie zum Beispiel einer Schnecke, der Austragsöffnung zugeführt werden.

Unterhalb der Austragsöffnung befindet sich erfindungsgemäss bevorzugt eine Absperreinheit, vorzugsweise eine Schleuseneinheit, wie zum Beispiel eine Zellradschleuse, ein Schieber, oder eine Walzeneinheit mit deren Hilfe der Granulatabfluss aus dem Behandlungsraum geregelt wird. Als Regelgrösse kann dabei zum Beispiel die Füllhöhe des Granulates im Behandlungsraum oder das Gewicht der Granulate in der den Behandlungsraum umfassenden Behandlungsvorrichtung dienen.

Zum Behandlungsraum der erfindungsgemässen Vorrichtung führen zumindest eine Zuführeinrichtung und zumindest eine Wegführeinrichtung für ein Behandlungsgas. Jede Zuführeinrichtung weist zumindest eine Eintrittsöffnung auf, durch die Behandlungsgas in den Behandlungsraum strömt. Jede Wegführeinrichtung weist zumindest eine Austrittsöffnung auf, durch die Behandlungsgas aus dem Behandlungsraum strömt.

Die Zuführeinrichtung kann sich dabei im Mantel oder vorzugsweise im Bodenbereich des Behandlungsraumes befinden. Die Wegführeinrichtung kann sich dabei im Mantel oder vorzugsweise im Deckenbereich des Behandlungsraumes befinden.

Eine besondere Ausführungsform sieht vor, dass eine Wegführeinrichtung für das Behandlungsgas in die Eintragsöffnung der Polyolefingranulate integriert ist.

Eine besondere Ausführungsform der vorliegenden Erfindung sieht vor, dass der Behandlungsraum nach unten teilweise durch eine gasdurchlässige Absperreinrichtung, insbesondere ein Lochblech mit einer Vielzahl an Eintrittsöffnungen, begrenzt wird, die von Behandlungsgas zumindest stellenweise, nicht aber von den Granulaten durchströmt werden kann. Dazu sind die Öffnungen kleiner als der Durchmesser der Granulate. Die Durchlassfläche weist bevorzugterweise zwischen 1% und 30% auf. Bevorzugt sind Öffnungen zwischen 20 und 90%, insbesondere zwischen 30 und 80% des Durchmessers der Granulate. Die Anzahl, Grösse und Anordnung der Öffnungen kann dabei gleichmässig oder ungleichmässig sein. Die Absperreinrichtung ist konisch oder schräg nach unten angeordnet, wobei die für den Auslaufkonus beschriebenen Winkel auch hier Gültigkeit haben.

Das den Behandlungsraum durchströmende Behandlungsgas dient zur effizienten Entfernung flüchtiger Komponenten aus dem Polyolefingranulat. Ein Erwärmen des Polyolefingranulats im Behandlungsraum ist nicht vorgesehen beziehungsweise wird nicht realisiert. Erfindungsgemäss kann auf ein Erwärmen des Polyolefingranulats im Behandlungsraum verzichtet werden, weil das Polyolefingranulat bei Eintritt in den Behandlungsraum eine für die effiziente Entfernung flüchtiger Komponenten ausreichende Latentwärme aufweist. Dies wird erfindungsgemäss wie vorstehend ausgeführt dadurch erreicht, dass einerseits die Granulation mit einem heissen flüssigen Kühlmedium durchgeführt und andererseits das Polyolefingranulat anschliessend schnell durch Abtrennung des flüssigen Kühlmediums getrocknet wird. Auf diese Weise wird eine zu grosse Abkühlung des Polyolefingranulats verhindert.

Erfindungsgemäss weisen mindestens 75% der trockenen Polyolefingranulate im Behandlungsraum eine Temperatur T3 auf, welche in einem Bereich von T2 ± 20°C, vorzugsweise T2 - 20°C bis T2 + 5°C und noch bevorzugter T2 - 15°C bis T2 liegt, aber unterhalb des Schmelzpunkts des Granulats, da ein Aufschmelzen des Materials im Behandlungsraum offensichtlich unerwünscht ist.

Da ein Erwärmen des Polyolefingranulats im Behandlungsraum nicht erwünscht ist und nicht durchgeführt werden soll, wird entweder vergleichsweise kühles Behandlungsgas oder nur eine vergleichsweise geringe Menge an Behandlungsgas in den Behandlungsraum eingeleitet. Vorzugsweise weist das Behandlungsgas bei Eintritt in den Behandlungsraum entweder eine Temperatur T4 unterhalb der Temperatur T2 des trockenen Polyolefingranulats auf, oder es wird in den Behandlungsraum in einer Menge eingeleitet, welche weniger als der Hälfte des Durchsatzes an Polyolefingranulat durch den Behandlungsraum entspricht.

Somit stellt sich im Behandlungsraum ein Temperaturprofil ein, wobei im Eintrittsbereich eine gleichmässige Temperatur vorherrscht. Aufgrund von Wärmeverlusten kühlt sich eine Aussenschicht im Bereich der Reaktorwand geringfügig ab, wobei sich die Temperaturdifferenz zwischen dem Material im Zentrum und dem Material am Rand mit zunehmender Verweildauer, und somit mit zunehmender Annäherung an den Austrittsbereich aus dem Behandlungsraum, erhöht. Im Austrittsbereich des Behandlungsraumes kann es zu einer weiteren Abkühlung durch zugeführtes Behandlungsgas kommen. Alternativ kann durch das zugeführte Behandlungsgas eine geringfügige Erwärmung des Materials erfolgen, wobei bevorzugt die Temperatur im Eintrittsbereich in den Behandlungsraum nicht überschritten wird. Erfindungsgemäss soll der Behandlungsraum derart ausgeführt sein, dass zumindest 75%, insbesondere zumindest als 85%.des Polyolefin-Materials im Behandlungsraum innerhalb des Bereichs von Temperatur T3 liegen. Dazu werden wie oben beschrieben die Menge und Temperatur des zugeführten Behandlungsgases derart gewählt, dass durch das Behandlungsgas nur eine geringfügige Änderung der Temperatur des Polyolefin-Materials erfolgt, und/oder kaltes Behandlungsgas wird an einer Position nahe der Austrittsöffnung aus dem Behandlungsraum zugeführt, wodurch nur eine kleiner Anteil des Polyolefin-Materials im Behandlungsraum abgekühlt wird. Weiter soll der Behandlungsraum derart Isoliert oder durch eine aktive Mantelheizung ausgestattet sein, dass Wärmeverluste gering gehalten werden können.

Es ist erfindungsgemäss bevorzugt, dass das trockene Polyolefingranulat im Behandlungsraum für einen Zeitraum von 0.5 bis 20 h, vorzugsweise 1 bis 10 h, besonders bevorzugt 2 bis 6 h verweilt.

Wird das Behandlungsgas im Gegenstrom geführt, wird die Querschnittsfläche des Behandlungsraums bevorzugt derart gestaltet, dass sich eine nach oben gerichtete Gasströmung mit einer Leerrohrgeschwindigkeit von 0.05 bis 0.8 m/s, insbesondere von 0.1 bis 0.7 m/s einstellt. Wird das Behandlungsgas im Gegenstrom geführt, sind Leerrohrgeschwindigkeiten im Bereich von 0.2 bis 4.0 m/s, insbesondere von 0.3 bis 3.0 m/s bevorzugt.

Gemäss einer Ausführungsform der vorliegenden Erfindung wird das trockene Polyolefingranulat im Behandlungsraum unter erhöhtem Druck behandelt, vorzugsweise unter einem Überdruck von 0.1 bis 990 mbar, bevorzugter unter einem Überdruck von 20 bis 500 mbar.

Hierbei ist der unter Überdruck der zusätzlich zum Atmosphärendruck (1 bar) angelegte Druck zu verstehen, so dass bei dieser Ausführungsform im Behandlungsraum in Absolutdruck 1.0001 bis 1.99 bar, bevorzugter 1.02 bis 1.5 bar beträgt.

Gemäss einer alternativen Ausführungsform der vorliegenden Erfindung wird das trockene Polyolefingranulat im Behandlungsraum unter verringertem Druck behandelt, vorzugsweise unter einem Unterdruck von 0.1 bis 999 mbar, bevorzugter unter einem Unterdruck von 10 bis 900 mbar, besonders bevorzugt unter eine Unterdruck von 20 bis 500 mbar. Hierbei ist der unter Unterdruck der gegenüber dem Atmosphärendruck (1 bar) verringerte Druck zu verstehen, so dass bei dieser Ausführungsform im Behandlungsraum der Absolutdruck 0.9999 bis 0.001 bar, bevorzugter 0.99 bis 0.1 bar und besonders bevorzugt 0.98 bis 0.5 bar beträgt.

Gemäss einer bevorzugten Ausführung ist der Unterdruck im Behandlungsraum derart gewählt, dass sich damit eine pneumatische Saugförderung betreiben lässt und dadurch die Materialzufuhr in den Behandlungsraum erfolgt. In diesem Fall ist ein Unterdruck von 50 bis 400 mbar, insbesondere 70 bis 300 mbar bevorzugt, so dass bei dieser Ausführungsform im Behandlungsraum der Absolutdruck 0.95 bis 0.6 bar, bevorzugter 0.93 bis 0.7 bar beträgt.

Optional wird das eingesetzte Behandlungsgas zumindest teilweise in einem Kreislaufsystem geführt, wobei jeweils eine geringe Menge an Austauschgas zu- und weggeführt werden kann. Zwischen der Wegführeinrichtung und Zuführeinrichtung für das Behandlungsgas besteht gemäss dieser bevorzugten Ausführungsform ein im Wesentlichen geschlossener Kreislauf aus Rohrleitungen.

Im Kreislauf können sich weitere Einheiten, wie zum Beispiel Pumpen, Verdichtungseinrichtungen (z. B. Ventilatoren, Gebläse oder Kompressoren), Wärmetauscher (z.B. Erhitzer), Absperrvorrichtungen z.B. ein Ventil oder Hahn) oder Reinigungseinrichtungen (z. B. Filter, Zyklone, Wäscher oder katalytische Verbrennungseinrichtungen), befinden. Erfindungsgemäss bevorzugt wird das Behandlungsgas nach Verlassen des Behandlungsraumes mit einer Flüssigkeit, vorzugsweise Wasser, gereinigt.

Nach Verlassen des Behandlungsraums wird gemäss einer bevorzugten Ausführungsform der vorliegenden Erfindung das Polyolefingranulat falls erforderlich gekühlt und gegebenenfalls noch durch ein dem Behandlungsraum nachgeschaltetes Klassiersieb geleitet, um allfällige Abriebpartikel aus der Förderung (Staub, Fäden auch Engelshaar oder streamers) zu entfernen.

Mit dem erfindungsgemässen Verfahren kann der Anteil flüchtiger Komponenten im Polyolefingranulat wesentlich verringert werden. Erfindungsgemäss bevorzugt wird der Anteil flüchtiger Komponenten im Polyolefingranulat um zumindest 90% verringert, bevorzugter um zumindest 95% und insbesondere bevorzugt um zumindest 99%. Das durch das erfindungsgemässe Verfahren gereinigte Polyolefingranulat weist flüchtige Komponenten nur noch im ppm-Bereich auf.

Das erfindungsgemässe Verfahren wird vorzugsweise kontinuierlich ausgeführt.

Das durch das erfindungsgemässe Verfahren gereinigte Polyolefingranulat kann anschliessend auf übliche Weise zu neuen Kunststoffartikeln verarbeitet werden. Entsprechende Verarbeitungsvorrichtungen sind dem Fachmann bekannt und könne direkt im Anschluss an die erfindungsgemässe Behandlungsvorrichtung angeordnet werden.

Das Verfahren der vorliegende Erfindung kann in einer Vorrichtung durchgeführt werden, umfassend
- eine Extrusionsvorrichtung,
- eine Granulationsvorrichtung nach der Extrusionsvorrichtung, vorzugsweise eine Unterwassergranulationsvorrichtung,
- eine Trocknungsvorrichtung nach der Granulationsvorrichtung, vorzugsweise ein Zentrifugalabscheider
- eine Behandlungsvorrichtung mit einem Behandlungsraum, wobei die Behandlungsvorrichtung einen Materialeinlass, einen Materialauslass, einen Gaseinlass und einen Gasauslass aufweist, wobei die Behandlungsvorrichtung vorzugsweise zusätzlich eine Vakuumpumpe aufweist,
- sowie Verbindungseinheiten zwischen den vorstehenden Vorrichtungen zum Befördern von Material.

Vorzugsweise weist hierbei die Extrusionsvorrichtung einen Schmelzefilter auf.

Weiterhin bevorzugt sind in der Verbindungseinheit zwischen Trocknungsvorrichtung und Behandlungsvorrichtung eine Anfahrweiche und eine Zellradschleuse angeordnet.

Das erfindungsgemässe Verfahren kann besonderes bevorzugt in einer Vorrichtung durchgeführt werden, umfassend
- eine Extrusionsvorrichtung mit Schmelzefilter,
- eine Unterwassergranulationsvorrichtung nach der Extrusionsvorrichtung,
- eine Trocknungsvorrichtung in Form eines Zentrifugaltrockners,
- eine Verbindungsleitung zwischen Zentrifugaltrockner und Behandlungsvorrichtung, wobei die Verbindungsleitung eine Anfahrweiche und eine sich daran anschliessende Zellradschleuse aufweist,
- eine Behandlungsvorrichtung mit einem Behandlungsraum, wobei die Behandlungsvorrichtung einen Materialeinlass, einen Materialauslass, einen Gaseinlass und einen Gasauslass sowie eine Pumpe, vorzugsweise eine Wasserring-Vakuumpumpe, aufweist und der Behandlungsraum vom Behandlungsgas im Gegenstrom zur Fliessrichtung des Granulats durchströmt wird,
- eine Zellradschleuse am Materialauslass der Behandlungsvorrichtung.

Die vorliegende Erfindung wird weiterhin anhand von nicht einschränkenden Zeichnungen beschrieben. Es zeigen:
- Fig. 1: eine schematische Darstellung einer Vorrichtung zur Durchführung des erfindungsgemässen Verfahrens
- Fig. 2: eine schematische Darstellung einer weiteren Ausführungsform einer Vorrichtung zur Durchführung des erfindungsgemässen Verfahrens

Gleiche Einheiten sind in den Figuren durch gleiche Bezugszeichen gekennzeichnet.

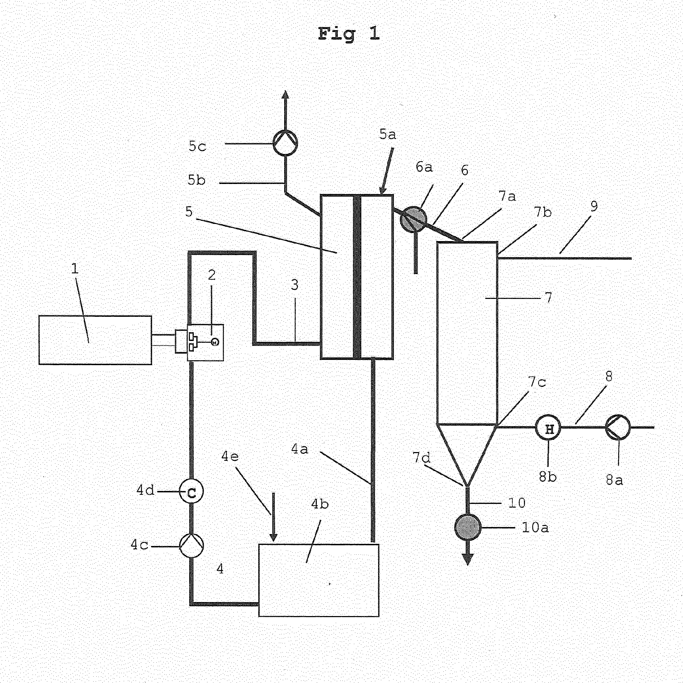

Die Vorrichtung gemäss Fig. 1 weist einen Reaktor 1 zur Herstellung einer Polymerschmelze auf. Erfindungsgemäss handelt es sich bei dem Reaktor 1 auch um eine Vorrichtung zum Aufschmelzen eines festen Produkts wie gebrauchtem Polyolefin-Material. Beispielhaft kann der Reaktor 1 in diesem Fall ein Extruder sein.

Das geschmolzene Polyolefin-Material wird in eine Granulationsvorrichtung 2 überführt. In der Granulationsvorrichtung 2 wird auf bekannte Weise ein Granulat aus dem geschmolzenen Material hergestellt. Beispielsweise kann es sich um einen Unterwassergranulator (wie in Fig. 1 gezeigt) handeln. Die Granulierung erfolgt in diesem Fall unter Wasser. Die erhaltenen Granulatpartikel werden im Granulator 2 gleichzeitig abgekühlt. Wie vorstehend ausgeführt darf die Abkühlung aber nicht so stark ausfallen, dass die Granulatpartikel unterhalb einer Temperatur T2 abgekühlt werden. Dies kann durch den Einsatz von erwärmtem Wasser, welches eine Temperatur T1 im Bereich von 50 bis 100°C, bevorzugt 70 bis 100°C, noch bevorzugter 75 bis 95°C und insbesondere bevorzugt 80 bis 90°C aufweist, erreicht werden. Das Granulat sollte auf eine Temperatur abgekühlt werden, welche im Bereich von 71°C-200°C, vorzugsweise 80°C-160°C und im Fall von Polyethylen besonders bevorzugt bei 71°-120°C liegt.

Das Granulat wird über eine Verbindungsleitung 3 in eine Einheit zum Trocknen des Granulats (Trennvorrichtung) 5 überführt. Zur Vermeidung einer zu starken Abkühlung des Granulats sollte dieses so schnell wie möglich aus dem Granulator 2 und durch die Verbindungsleitung 3 geführt werden. Vorzugsweise kann die Fliessgeschwindigkeit in der Verbindungsleitung 3 durch Einleitung eines Gasstroms (vorzugsweise Luft) erhöht werden.

In der Einheit zum Trocknen des Granulats (Trennvorrichtung) 5 wird das Granulat vom flüssigen Kühlmedium (Wasser) abgetrennt und getrocknet. Das abgetrennte Kühlmedium wird über eine Rohrleitung 4a zurück in einen Vorratsbehälter (Tank) 4b für das Kühlmedium geführt. Der Vorratsbehälter 4b weist einen Einlass 4e zur Zuführung von Kühlmedium auf. Vom Vorratsbehälter 4b wird das Kühlmedium mit Hilfe einer Umwälzvorrichtung (Pumpe) 4c in die Granulationsvorrichtung 2 überführt. Hierbei durchläuft das Kühlmedium vorzugsweise einen Wärmetauscher 4d. Im Wärmetauscher 4d kann das Kühlmedium nach Bedarf erwärmt oder abgekühlt werden. Insbesondere aus der Trennvorrichtung 5 zurückgeführtes Kühlmedium kann aufgrund des Kontakts mit heissem Granulat eine zu hohe Temperatur aufweisen und muss vor dem Eintritt in die Granulationsvorrichtung 2 gekühlt werden.

Das frische Kühlmedium, das über den Einlass 4e zugeführt wird, kann ein basisches Medium oder ein pH-Puffermedium enthalten. Insbesondere ist hier die Verwendung von Wasser mit einer in einem engen Bereich eingestellten Neutralisations- oder Pufferwirkung vorgesehen. Alternativ kann die Zugabe eines basischen Mediums oder eines pH-Puffermediums auch direkt in den Kühlkreislauf, z.B. in den Vorratstank 4b, erfolgen.

Die Trocknung des Granulats in der Einheit 5 erfolgt neben einer mechanischen Trennvorrichtung mit Hilfe von Gas, vorzugsweise Luft oder einer im wesentlichen Luft umfassenden Gasatmosphäre, bei einer Temperatur von 100 bis 200°C, vorzugsweise 110 bis 160°C. In der Vorrichtung gemäss Fig. 1 wird die Luft durch eine Eintrittsöffnung 5a in die Trennvorrichtung 5 geführt. Die Eintrittsöffnung 5a für das Gas kann sich im Gehäuse der Trennvorrichtung 5 oder in der Verbindungsleitung 6 oder an beiden Orten befinden. Optional kann in der zur Eintrittsöffnung 5a führenden Gasleitung ein (nicht gezeigter) Ansaugfilter angeordnet sein. Die Luft verlässt die Trennvorrichtung 5 durch die Austrittsleitung 5b. In der Vorrichtung gemäss Fig. 1 ist in der von der Austrittsleitung 5b ein Ventilator 5c zur Zirkulation der Luft durch die Trennvorrichtung 5 angeordnet. Der Ventilator könnte jedoch alternativ auch in der Lufteinlassleitung 5a angeordnet sein. Weiterhin könnten Eintrittsöffnung 5a und Austrittsleitung 5b miteinander unter Bildung eines Kreislaufsystems verbunden sein. In diesem Kreislaufsystem ist dann ein Kondensator bereitzustellen.

Das Granulat wird aus der Trennvorrichtung 5 über eine Verbindungsleitung 6 durch eine Eintragsöffnung 7a in eine Einheit 7 mit einem Behandlungsraum überführt. In der Verbindungsleitung 6 ist eine Anfahrweiche 6a mit Austragsleitung bereitgestellt.

In der Einheit 7 wird das Polyolefin-Granulat erfindungsgemäss behandelt. Innerhalb des Behandlungsraums der Einheit 7 werden die Granulatpartikel durch einen im Gegenstrom oder Kreuzstrom durch die Einheit 7 geleiteten Gasstrom wärmebehandelt. Innerhalb des Behandlungsraums der Einheit 7 liegen die Bedingungen eines Festbetts vor.

Mindestens 75% der trockenen Polyolefingranulate weisen im Behandlungsraum der Einheit 7 eine Temperatur T3 auf, welche in einem Bereich von T2 ± 20°C liegt, aber unterhalb des Schmelzpunkts des Granulats.

Vorzugsweise ist das in die Einheit 7 eingeleitete Behandlungsgas Luft. Das Behandlungsgas weist vorzugsweise bei Eintritt in den Behandlungsraum entweder eine Temperatur T4 unterhalb der Temperatur T2 des trockenen Polyolefingranulats auf, oder das Gas wird in den Behandlungsraum in einer Menge eingeleitet, welche weniger als der Hälfte des Durchsatzes an Polyolefingranulat durch den Behandlungsraum entspricht.

Das trockene Polyolefingranulat verweilt im Behandlungsraum der Einheit 7 für einen Zeitraum von 0.5 bis 20 h, vorzugsweise 1 bis 10 h, besonders bevorzugt 2 bis 6 h.

Das gereinigte Granulat verlässt die Einheit 7 durch eine Austragsöffnung 7d und eine Austragsleitung 10, vorzugsweise über eine Austragsvorrichtung 10a, beispielsweise einer Absperreinheit wie einer Zellradschleuse.

Das Prozessgas tritt in die Einheit 7 durch eine Eintrittsöffnung 7c ein und verlässt die Einheit 7 durch eine Austrittsöffnung 7b in eine Gaswegführleitung 9. In der Zuführleitung 8 des Prozessgases befindet sich ein Gebläse 8a, beispielsweise ein Ventilator, zur Zirkulation des Gases. Vor der Eintrittsöffnung 7c ist ein Wärmetauscher 8b bereitgestellt, um das Gas vor dem Eintritt in die Einheit 7 auf die gewünschte Temperatur zu bringen. Das in der Einheit 7 verwendete Prozessgas, vorzugsweise Luft, kann aber auch durch ein geschlossenes Kreislaufsystem aus Rohrleitungen 8, 9 geführt werden.

Es ist mit der Vorrichtung gemäss Fig. 1 durch entsprechende Einstellung der eingeleiteten Gasmenge möglich, dass das trockene Polyolefingranulat im Behandlungsraum der Einheit 7 unter erhöhtem Druck behandelt wird, vorzugsweise unter einem Überdruck von 0.1 bis 990 mbar, bevorzugter unter einem Überdruck von 20 bis 500 mbar.

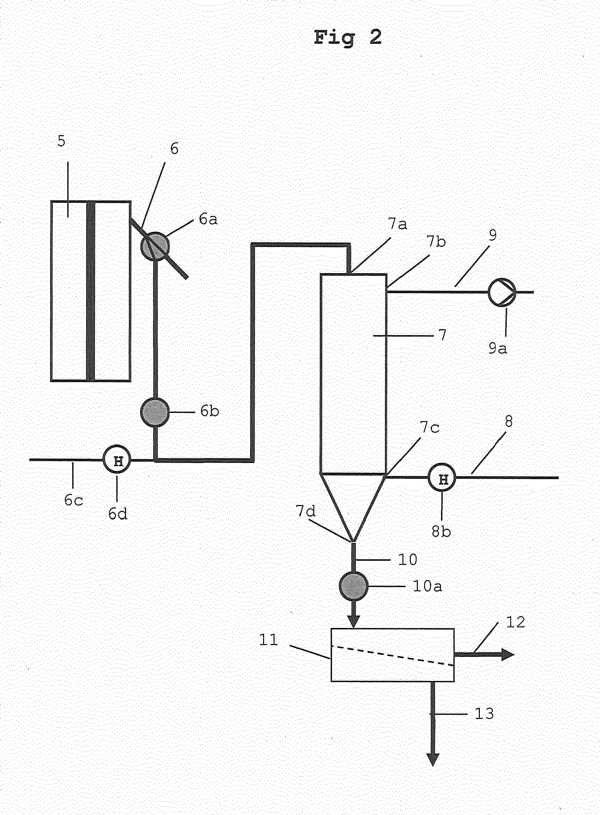

In Fig. 2 ist eine weitere Ausführungsform einer erfindungsgemäss geeigneten Vorrichtung gezeigt. Bei dieser Ausführungsform wird das getrocknete Polyolefingranulat nicht direkt aus der Einheit 5 in die Einheit 7 befördert, sondern nach der Anfahrweiche 7 zu einer Absperreinheit 6b wie einer Zellradschleuse geleitet. Durch eine Fördergasleitung 6c und einer Einrichtung 6d zur Erwärmung des Fördergases, beispielsweise einem Wärmetauscher, wird erhitztes Fördergas zugeführt, um das Granulat nach Verlassen der Zellradschleuse 6b pneumatisch in die Einheit 7 zu fördern.

In der Ausführungsform gemäss Fig. 2 ist in der Gaswegführleitung 9 eine Pumpe 9a, vorzugsweise eine Vakuumpumpe, angeordnet. Auf diese Weise ist es durch Entfernung zumindest eines Teils der Gasatmosphäre aus dem Behandlungsraum der Einheit 7 mittels der Pumpe 9a möglich, dass das trockene Polyolefingranulat im Behandlungsraum der Einheit 7 unter verringertem Druck behandelt wird, vorzugsweise unter einem Unterdruck von 0.1 bis 999 mbar, bevorzugter unter einem Unterdruck von 10 bis 900 mbar, besonders bevorzugt unter eine Unterdruck von 20 bis 500 mbar. Gleichzeitig kann die Pumpe 9a zur Förderung des Gases herangezogen werden.

Nach Verlassen der Einheit 7 durch die Absperreinheit 10a, vorzugsweise eine Zellradschleuse, wird das gereinigte PolyolefinGranulat bei der Ausführungsform gemäss Fig. 2 durch eine Trenneinrichtung 11, vorzugsweise ein Klassiersieb, geleitet. Hierbei abgetrenntes Überkorn wird durch eine Austragsleitung 12 aus dem Produktstrom entfernt, während das gereinigte Polyolefin-Granulat durch eine Austragsleitung 13 geleitet wird.

## Patentansprüche

1. Verfahren zum Recycling von Polyolefinen, umfassend die Schritte
a) Extrusion von gebrauchtem Polyolefin-Material das mit flüchtigen Komponenten verunreinigt ist, welche das Polyolefin-Material während seines Gebrauchs aufgenommen hat,
b) Herstellung von Granulaten aus dem aus der Extrusion austretenden Polyolefin-Material in einem flüssigen Kühlmedium,
c) Abtrennen des Kühlmediums zum Erhalt eines trockenen Polyolefingranulats
d) Behandlung des trockenen Polyolefingranulats in einem Behandlungsraum mit einem Behandlungsgas, vorzugsweise im Gegenstrom,
**dadurch gekennzeichnet, dass**
das Verfahren derart durchgeführt wird, dass das trockene Polyolefingranulat direkt nach dem Abtrennen des Kühlmediums im Schritt c) noch eine Temperatur T2 aufweist, welche oberhalb einer Temperatur T1 des flüssigen Kühlmediums im Schritt b) liegt und im Bereich von 71°C-200°C, vorzugsweise 80°C-160°C, aber unterhalb des Schmelzpunkts des Granulats liegt, und mindestens 75% der trockenen Polyolefingranulate im Behandlungsraum eine Temperatur T3 aufweisen, welche in einem Bereich von T2 ± 20°C liegt, aber unterhalb des Schmelzpunkts des Granulats.

2. Verfahren nach Anspruch 1, **dadurch gekennzeichnet, dass** das flüssige Kühlmedium im Schritt b) Wasser ist.

3. Verfahren nach Anspruch 1 oder 2, **dadurch gekennzeichnet, dass** Schritt c) in einem Zentrifugaltrockner durchgeführt wird.

4. Verfahren nach einem der vorhergehenden Ansprüche, **dadurch gekennzeichnet, dass** das Behandlungsgas in Schritt d) Luft ist.

5. Verfahren nach einem der vorhergehenden Ansprüche, **dadurch gekennzeichnet, dass** das Behandlungsgas bei Eintritt in den Behandlungsraum entweder eine Temperatur T4 unterhalb der Temperatur T2 des trockenen Polyolefingranulats aufweist oder in den Behandlungsraum in einer Menge eingeleitet wird, welche weniger als der Hälfte des Durchsatzes an Polyolefingranulat durch den Behandlungsraum entspricht.

6. Verfahren nach einem der vorhergehenden Ansprüche, **dadurch gekennzeichnet, dass** das trockene Polyolefingranulat im Behandlungsraum für einen Zeitraum von 0.5 bis 20 h, vorzugsweise 1 bis 10 h, besonders bevorzugt 2 bis 6 h verweilt.

7. Verfahren nach einem der vorhergehenden Ansprüche, **dadurch gekennzeichnet, dass** das trockene Polyolefingranulat im Behandlungsraum unter erhöhtem Druck behandelt wird, vorzugsweise unter einem Überdruck von 0.1 bis 990 mbar, bevorzugter unter einem Überdruck von 20 bis 500 mbar.

8. Verfahren nach einem der vorhergehenden Ansprüche, **dadurch gekennzeichnet, dass** das trockene Polyolefingranulat im Behandlungsraum unter verringertem Druck behandelt wird, vorzugsweise unter einem Unterdruck von 0.1 bis 999 mbar, bevorzugter unter einem Unterdruck von 10 bis 900 mbar, besonders bevorzugt unter eine Unterdruck von 20 bis 500 mbar.

9. Verfahren nach einem der vorhergehenden Ansprüche, **dadurch gekennzeichnet, dass** das Behandlungsgas nach Verlassen des Behandlungsraumes mit einer Flüssigkeit, vorzugsweise Wasser, gereinigt wird.

10. Verfahren nach einem der vorhergehenden Ansprüche, **dadurch gekennzeichnet, dass** das flüssige Kühlmedium im Schritt b) eine Temperatur T1 im Bereich von 50 bis 100°C, bevorzugt 70 bis 100°C, noch bevorzugter 75 bis 95°C und insbesondere bevorzugt 80 bis 90°C aufweist.

11. Verfahren nach einem der vorhergehenden Ansprüche, **dadurch gekennzeichnet, dass** die Kontaktzeit von Granulat und flüssigem Kühlmedium wenige Sekunden, vorzugsweise höchstens 10 s, besonders bevorzugt 0,1 bis 3 s und insbesondere bevorzugt 0,2 bis 1.5 s beträgt.

12. Verfahren nach einem der vorhergehenden Ansprüche, **dadurch gekennzeichnet, dass** während der Extrusion Komponenten mittels Schmelzentgasung und/oder Filtration entfernt werden.

13. Verfahren nach einem der vorhergehenden Ansprüche, **dadurch gekennzeichnet, dass** das Polyolefin-Material vor der Extrusion vorbehandelt wird, wobei die Vorbehandlung ausgewählt ist aus der Gruppe bestehend aus Sortierung nach Farbe, Sortierung nach Polymerart, Zerkleinerung, Oberflächenreinigung wie Waschen, Vortrocknung, und Kombinationen davon.

14. Verfahren nach einem der vorhergehenden Ansprüche, **dadurch gekennzeichnet, dass** die Überführung des trockenen Polyolefingranulats in den Behandlungsraum durch eine pneumatische Förderung erfolgt.

## Claims

1. A process for recycling polyolefins, comprising the steps
a) Extrusion of used polyolefin material which is contaminated with volatile components which the polyolefin material has taken up during its use,
b) Production of granules from the polyolefin material emerging from the extrusion into a liquid cooling medium,
c) Separation of the cooling medium to obtain a dry polyolefin granulate
d) Treatment of the dry polyolefin granulate in a treatment space with a treatment gas, preferably in counter-current flow,
**characterised in that**
the process is carried out in such a way that the dry polyolefin granules, directly after separation of the cooling medium in step c), still have a temperature T2 which is above a temperature T1 of the liquid cooling medium in step b) and is in the range of 71°C-200°C, preferably 80°C-160°C, but below the melting point of the granules, and at least 75% of the dry polyolefin granules in the treatment space have a temperature T3 which is in the range T2 ± 20°C, but below the melting point of the granules.

2. Process according to claim 1, **characterized in that** the liquid cooling medium in step b) is water.

3. Process according to claim 1 or 2, **characterized in that** step c) is carried out in a centrifugal dryer.

4. Process according to any of the preceding claims, **characterized in that** the treatment gas in step d) is air.

5. Process according to any of the preceding claims, **characterized in that** the treatment gas, on entering the treatment space, either has a temperature T4 below the temperature T2 of the dry polyolefin granules, or is introduced into the treatment space in an amount corresponding to less than half the throughput of polyolefin granules through the treatment space.

6. Process according to any of the preceding claims, **characterized in that** the dry polyolefin granules remain in the treatment space for a period of 0.5 to 20 h, preferably 1 to 10 h, particularly preferably 2 to 6 h.

7. Process according to any of the preceding claims, **characterized in that** the dry polyolefin granules are treated in the treatment space under elevated pressure, preferably under an excess pressure of 0.1 to 990 mbar, more preferably under an excess pressure of 20 to 500 mbar.

8. Process according to any of the preceding claims, **characterized in that** the dry polyolefin granules are treated in the treatment space under reduced pressure, preferably under a reduced pressure of 0.1 to 999 mbar, more preferably under a reduced pressure of 10 to 900 mbar, particularly preferably under a reduced pressure of 20 to 500 mbar.

9. Process according to any of the preceding claims, **characterized in that** the treatment gas is cleaned with a liquid, preferably water, after leaving the treatment space.

10. Process according to any of the preceding claims, **characterized in that** the liquid cooling medium in step b) has a temperature T1 in the range from 50 to 100°C, preferably 70 to 100°C, even more preferably 75 to 95°C and in particular preferably 80 to 90°C.

11. Process according to any of the preceding claims, **characterized in that** the contact time of granulate and liquid cooling medium is a few seconds, preferably at most 10 s, particularly preferably 0.1 to 3 s and particularly preferably 0.2 to 1.5 s.

12. Process according to any of the preceding claims, **characterized in that** components are removed during extrusion by means of melt degassing and/or filtration.

13. Process according to any of the preceding claims, **characterized in that** the polyolefin material is pretreated prior to extrusion, wherein the pre-treatment is selected from the group consisting of sorting by colour, sorting by polymer type, comminution, surface cleaning such as washing, pre-drying, and combinations thereof.

14. Process according to any of the preceding claims, **characterised in that** the transfer of the dry polyolefin granulate into the treatment space is effected by pneumatic conveying.

## Revendications

1. Procédé de recyclage des polyoléfines, comprenant les étapes suivantes
a) Extrusion du matériau polyoléfine usagé qui est contaminé par des composants volatils que le matériau polyoléfine a absorbés au cours de son utilisation,
b) Production de granulés à partir du matériau polyoléfine sortant de l'extrusion dans un milieu de refroidissement liquide,
c) Séparation du milieu de refroidissement pour obtenir un granulé sec de polyoléfine
d) Traitement du granulé sec de polyoléfine dans un espace de traitement avec un gaz de traitement, de préférence à contre-courant,
**caractérisé en ce que**
le procédé est réalisé de telle sorte que les granulés secs de polyoléfine, directement après la séparation du milieu de refroidissement à l'étape c), présentent encore une température T2 supérieure à la température T1 du milieu de refroidissement liquide à l'étape b) et comprise entre 71°C et 200°C, de préférence entre 80°C et 160°C, mais inférieure au point de fusion des granulés, et qu'au moins 75 % des granulés secs de polyoléfine dans l'espace de traitement présentent une température T3 comprise entre T2 ± 20°C, mais inférieure au point de fusion des granulés.

2. Procédé selon la revendication 1, **caractérisé en ce que** le milieu de refroidissement liquide à l'étape b) est de l'eau.

3. Procédé selon la revendication 1 ou 2, **caractérisé en ce que** l'étape c) est effectuée dans un séchoir centrifuge.

4. Procédé selon l'une des revendications précédentes, **caractérisé en ce que** le gaz de traitement à l'étape d) est de l'air.

5. Procédé selon l'une quelconque des revendications précédentes, **caractérisé en ce que** le gaz de traitement, lorsqu'il entre dans l'espace de traitement, soit a une température T4 inférieure à la température T2 des granulés secs de polyoléfine, soit est introduit dans l'espace de traitement en une quantité correspondant à moins de la moitié du débit des granulés de polyoléfine dans l'espace de traitement.

6. Procédé selon l'une quelconque des revendications précédentes, **caractérisé en ce que** les granulés de polyoléfine secs restent dans l'espace de traitement pendant une période de 0,5 à 20 heures, de préférence de 1 à 10 heures, plus préférentiellement de 2 à 6 heures.

7. Procédé selon l'une quelconque des revendications précédentes, **caractérisé en ce que** les granulés secs de polyoléfine sont traités dans l'espace de traitement sous une pression élevée, de préférence sous une surpression de 0,1 à 990 mbar, plus préférentiellement sous une surpression de 20 à 500 mbar.

8. Procédé selon l'une quelconque des revendications précédentes, **caractérisé en ce que** les granulés secs de polyoléfine sont traités dans l'espace de traitement sous pression réduite, de préférence sous une pression réduite de 0,1 à 999 mbar, plus préférentiellement sous une pression réduite de 10 à 900 mbar, particulièrement préférentiellement sous une pression réduite de 20 à 500 mbar.

9. Procédé selon l'une des revendications précédentes, **caractérisé en ce que** le gaz de traitement est nettoyé avec un liquide, de préférence de l'eau, après avoir quitté l'espace de traitement.

10. Procédé selon l'une quelconque des revendications précédentes, **caractérisé en ce que** le milieu de refroidissement liquide à l'étape b) a une température T1 comprise entre 50 et 100°C, de préférence entre 70 et 100°C, plus préférentiellement entre 75 et 95°C et particulièrement préférentiellement entre 80 et 90°C.

11. Procédé selon l'une quelconque des revendications précédentes, **caractérisé en ce que** le temps de contact entre le granulé et le milieu de refroidissement liquide est de quelques secondes, de préférence au maximum 10 s, plus préférentiellement de 0,1 à 3 s et particulièrement préférentiellement de 0,2 à 1,5 s.

12. Procédé selon l'une quelconque des revendications précédentes, **caractérisé en ce que** pendant l'extrusion au moyen d'un dégazage de la matière fondue et/ou d'une filtration, des composants sont retirés.

13. Procédé selon l'une quelconque des revendications précédentes, **caractérisé en ce que** le matériau polyoléfine est prétraité avant l'extrusion, le prétraitement étant choisi dans le groupe constitué par le tri par couleur, le tri par type de polymère, le broyage, le nettoyage de surface tel que le lavage, le préséchage et les combinaisons de ceuxci .

14. Procédé selon l'une quelconque des revendications précédentes, **caractérisé en ce que** le transfert des granulés secs de polyoléfine dans l'espace de traitement est effectué par transport pneumatique.
